(19) Europäisches Patentamt
European Patent Office
Office européen des brevets

(11) **EP 3 333 125 B1**

(12) **EUROPÄISCHE PATENTSCHRIFT**

(45) Veröffentlichungstag und Bekanntmachung des Hinweises auf die Patenterteilung:
**15.05.2019   Patentblatt 2019/20**

(51) Int Cl.:
***C01B 13/11*** *(2006.01)*

(21) Anmeldenummer: **16202684.3**

(22) Anmeldetag: **07.12.2016**

(54) **VERFAHREN ZUR STEUERUNG EINES OZONGENERATORS**

METHOD FOR CONTROLLING AN OZONE GENERATOR

PROCÉDÉ DESTINÉ À LA COMMANDE D'UN GÉNÉRATEUR D'OZONE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**13.06.2018   Patentblatt 2018/24**

(73) Patentinhaber: **Xylem IP Management S.à.r.l.**
**1259 Senningerberg (LU)**

(72) Erfinder:
- **FIEKENS, Ralf**
  **33758 Schlossholte-Stukenbrock (DE)**
- **FIETZEK, Reiner**
  **32049 Herford (DE)**
- **SALVERMOSER, Manfred**
  **32049 Herford (DE)**
- **BRÜGGEMANN, Nicole**
  **32130 Enger (DE)**

(74) Vertreter: **Lenzing Gerber Stute**
**PartG von Patentanwälten m.b.B.**
**Bahnstraße 9**
**40212 Düsseldorf (DE)**

(56) Entgegenhaltungen:
**WO-A1-90/07466      WO-A1-2007/014473**
**US-A- 5 868 999**

**Beschreibung**

Die vorliegende Erfindung betrifft ein Verfahren zur Steuerung eines Ozongenerators mit den Merkmalen des Oberbegriffs des Anspruchs 1.

Ozon ist ein starkes Oxidationsmittel. Schad- und Farbstoffe, geschmacks- und geruchsbeeinträchtigende Substanzen sowie Mikroorganismen werden von Ozon durch Oxidation zerstört. Ozon wird daher in verschiedensten Applikationsbereichen eingesetzt, zum Beispiel in der Trinkwasseraufbereitung, der Abwasserbehandlung, zur Papierbleiche, zur Luftreinhaltung oder aber auch zur Behandlung von kontaminierten Böden.

Ozonerzeuger sind aus dem Stand der Technik bekannt. Sie umfassen eine Vielzahl von Ozongeneratoren, die nach Art eines Rohrbündelwärmetauschers parallel zueinander zwischen zwei Rohrböden angeordnet sind. Ozongeneratoren weisen herkömmlicherweise eine Außenelektrode und wenigstens eine Innenelektrode auf, die im Betrieb mit einer Hochspannung beaufschlagt werden, die eine stille Entladung in den Zwischenräumen hervorruft.

Je nach Applikationsbereich ist eine hohe oder niedrige Ozonkonzentration erwünscht. Hohe Ozonkonzentrationen (>12 Gew.%) werden am wirtschaftlichsten von sogenannten "narrow-gap"-Ozongeneratoren mit einer Spaltweite kleiner als 1 mm produziert, niedrigere Ozonkonzentrationen (<12 Gew.%) dagegen mit Elektroden, die Spaltweiten ab einem Millimeter aufweisen. Ein Diagramm der Effizienz der Ozonerzeugung in Abhängigkeit der Spaltweite für Luft und Sauerstoff mit unterschiedlichem Ozongehalt ist beispielsweise aus der WO 2007/014473 A1 bekannt.

Die Anpassung der Spaltweite wird herkömmlicherweise, wie zum Beispiel in der WO 2007/014473 A1, mechanisch gelöst und kann bei nötigen Anpassungen an unterschiedliche Betriebsbedingungen nur durch Austausch der Innenelektrode erfolgen. Durch den Austausch der Elektrode und die Fertigung bzw. Lagerung der verschiedenen Varianten an Innenelektroden entstehen hohe Kosten.

Es ist Aufgabe der vorliegenden Erfindung, ein Verfahren zur Steuerung eines Ozongenerators bereitzustellen, bei dem die effektive Spaltweite individuell ohne einen Austausch der Elektrodenanordnung angepasst werden kann, so dass auch hohe Ozonkonzentrationen effektiv hergestellt werden können.

Diese Aufgabe wird von einem Verfahren zur Steuerung eines Ozongenerators mit den Merkmalen des Anspruchs 1 gelöst.

Danach ist ein Verfahren zur Steuerung eines Ozongenerators mit einer Hochspannungselektrode und wenigstens einer Gegenelektrode vorgesehen, wobei die Hochspannungselektrode und die wenigstens eine Gegenelektrode einen Zwischenraum begrenzen, in dem wenigstens ein Dielektrikum ange-ordnet ist und der von einem sauerstoffhaltigen Gas mit einer Teilchendichte $n_{gas}$ [$1/m^3$] durchströmt wird, und wobei die Hochspannungselektrode und die wenigstens eine Gegenelektrode mit einem Anschluss für eine elektrische Spannungsversorgung zur Erzeugung von stillen Entladungen in wenigstens einem Entladungsspalt versehen sind, und wobei Schlagweiten d der Entladung zwischen einer kleinsten Schlagweite $d_{min}$ und einer größten Schlagweite $d_{max}$ verteilt sind, und wobei für eine zu erzeugende Ozonkonzentration > 12 Gew.-% Ozon die Spannungsamplitude $U_0$ einer Wechselspannung an der elektrischen Spannungsversorgung so gewählt wird, dass $U_0 < 130*10^{-21}$ V*$m^2$ * $n_{gas}$ * $d_{max}$ * $(C_{DL}+C_g)/C_{DL}$ ist, mit der Spannungsamplitude Uo, dem Faktor $130*10^{-21}$, der die reduzierte elektrische Feldstärke (Quotient aus elektrischer Feldstärke und Teilchendichte) wiedergibt und die Einheit V*$m^2$ (Volt * Meter$^2$) hat, auch als CGS-Einheit Townsend (Td) bekannt, mit der Teilchendichte $n_{gas}$ [$1/m^3$], der größten Schlagweite $d_{max}$ [m] und mit $C_{DL}$ = Kapazität des Dielektrikums und $C_g$ =Kapazität des Entladungsspalts.

Dabei soll unter dem Begriff "Verfahren zur Steuerung" verstanden werden, dass das entsprechende Steuerungsverfahren im andauernden Betrieb des Ozonerzeugers angewendet wird, der von einigen Minuten bis hin zum kontinuierlichen Betrieb über mehrere Tage oder Wochen andauern kann. Nicht beansprucht werden transitorische Vorgänge, bei denen der Ozongenerator nur für kurze Zeit mit genannten und oben definierten Spannung $U_0$ beaufschlagt wird, wie es beispielsweise bei Ein- und Ausschaltvorgängen in herkömmlichen Steuerungsverfahren der Fall sein kann.

Ein nach diesem Steuerungsverfahren betriebener Ozongenerator kann je nach Leistung, Einsatzgas und Volumenstrom des Gases auch so betrieben werden, dass weniger als 12 Gew.% Ozon erzeugt werden. Dies ist aber nicht Gegenstand der Erfindung und wird nicht beansprucht.

Der Ozongengerator wird mit dem Ziel der Erzeugung einer bestimmten Ozonkonzentration betrieben. Diese Ozonkonzentration wird der Regelung vorgegeben. In Abhängigkeit von der zu erzeugenden Ozonkonzentration wird die effektive Spaltweite bzw. Schlagweite durch Auswahl der Spannungsamplitude gewählt. Diese Auswahl basiert auf den bekannten Kennlinien, die die Effizienz der Ozonerzeugung in Abhängigkeit der Spaltweite für Luft und Sauerstoff mit unterschiedlichem Ozongehalt angeben. Somit kann in Abhängigkeit von der Spannungsamplitude bei vorgegebenem Ozongehalt, die Effizienz der Ozonerzeugung gesteigert werden. Durch Variation der Teilchendichte und der Frequenz der Spannung kann die absolut erzeugte Ozonmenge pro Stunde eingestellt werden. Das erfindungsgemäße Verfahren erlaubt es, die effektive Spaltweite des Ozongenerators ohne Austausch der Elektrodenanordnung so einzustellen, dass er besonders effektiv auch bei hohen zu erzeugenden Ozonkonzentrationen betrieben wird.

Dabei kann es vorteilhaft sein, dass $U_0 < 120*10^{-21}$ V*$m^2$ * $n_{gas}$ * $d_{max}$ * $(C_{DL}+C_g)/C_{DL}$ ist. Weiterhin kann vorgesehen sein, die Spannungsamplitude so

einzustellen, dass $U_0 < 110*10^{-21}$ V$*$m$^2$ $*$ $n_{gas}*$ $d_{max}$ $*$ $(C_{DL}+C_g)/C_{DL}$ ist oder aber auch, dass $U_0 < 100*10^{-21}$ V$*$m$^2$ $*$ $n_{gas}$ $*$ $d_{max}$ $*$ $(C_{DL}+C_g)/C_{DL}$ ist. Je höher die zu erzeugenden Ozonkonzentration ist desto geringer ist die Spannungsamplitude zu wählen, was dazu führt, dass die gezündeten Schlagweite immer kleiner werden und somit sich eine effektiv kleinere Spaltweite einstellt.

Dabei ist es für eine zu erzeugende Ozonkonzentration > 18 Gew.-% Ozon vorteilhaft, wenn die Spannungsamplitude $U_0$ so gewählt wird, dass $U_0 < 100*10^{-21}$ V$*$m$^2$ $*$ $n_{gas}$ $*$ $d_{max}$ $*$ $(C_{DL}+C_g)/C_{DL}$ ist. Es kann auch vorgesehen sein, dass $U_0 < 90*10^{-21}$ V$*$m$^2$ $*$ $n_{gas}$ $*$ $d_{max}$ $*$ $(C_{DL}+C_g)/C_{DL}$ ist.

In einer Ausführungsform ist die Hochspannungselektrode profiliert. Vorzugsweise ist die Verteilung der Schlagweiten durch ein Flächengebilde aus Draht gebildet. Dabei kann das Flächengebilde aus Draht als Elektrode fungieren oder die eigentliche Elektrode umgeben. Es ist vorgesehen, dass die Profilierung kontinuierlich und periodisch oder stochastisch verteilt ist. Im Gegensatz zu in Längsrichtung gestuften Elektroden wiederholt sich das Muster der Profilierung periodisch oder die Schlagweiten der Profilierung sind stochastisch über die Elektrode verteilt. Die periodische oder stochastische Verteilung trifft auch auf den Fall zu, bei dem das Dielektrikum die Profilierung aufweist und die Elektroden glatt ausgebildet sind.

In einer bevorzugten Ausführungsform weist der Ozongenerator eine einzige Gegenelektrode auf und das Dielektrikum ist in Anlage an die Gegenelektrode angeordnet. Dabei handelt es sich um ein sogenanntes Ein-Spalt-System. Die Schlagweite ist dabei definiert als der Abstand zwischen dem Dielektrikum und der Hochspannungselektrode. Vorzugsweise ist der Innendurchmesser der Hochspannungselektrode konstant über die Länge der Elektrodenanordnung. Dadurch ist die Fertigung der Elektrode deutlich vereinfacht.

In zwei bevorzugten Ausführungsformen bilden die wenigstens eine Gegenelektrode und die Hochspannungselektrode einen Plattenozonerzeuger oder einen Rohrozonerzeuger, bei dem die wenigstens eine Gegenelektrode und die Hochspannungselektrode rohrförmig und konzentrisch zueinander ausgerichtet sind, und das Flächengebilde eine runde Hohlschnur ist. Dabei werden Plattenozonerzeuger bevorzugt bei kleinen Ozonerzeugern eingesetzt, die meistens luftgekühlt sind. Rohrozonerzeuger werden hingegen bevorzugt in großen Ozonerzeugern eingesetzt, die eine Vielzahl von Ozongeneratoren aufweisen und größtenteils mit Wasser gekühlt werden.

Eine bevorzugte Ausführungsform der Erfindung wird nachfolgend anhand der Zeichnungen näher erläutert. Es zeigen:

Fig. 1: eine perspektive Darstellung einer Elektrodenanordnung aus dem Stand der Technik,

Fig. 2: eine schematische Darstellung eines Entladungsbildes eines Ozongenerators mit variabler Spaltweite, sowie

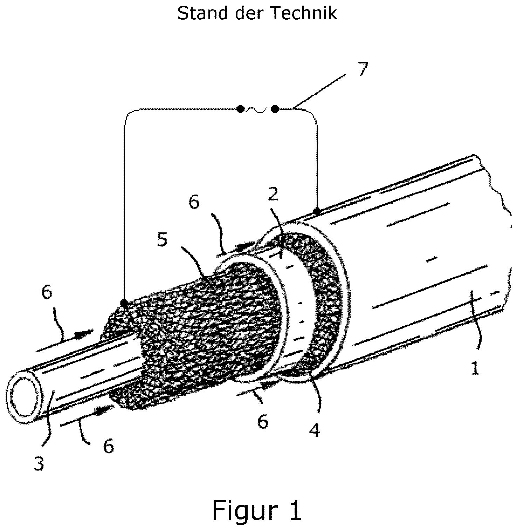

Figur 1 zeigt eine Elektrodenanordnung eines Ozongenerators, wie sie aus DE 10 2011 008 947 A1 bekannt ist. Solche Ozongeneratoren werden gruppiert in einem Ozonerzeuger eingesetzt. Die Ozongeneratoren sind dabei nach Art eines Rohrbündelwärmetauschers parallel zueinander zwischen zwei Rohrböden angeordnet und elektrisch parallel geschaltet. Der gezeigte Ozongenerator weist eine rohrförmigen Außenelektrode 1, ein ebenfalls rohrförmigen Dielektrikum 2 und einen innenliegenden Stab 3 auf, wobei die einzelnen Komponenten verkürzt und in Axialrichtung auseinander gezogen dargestellt sind. Die Anordnung ist rotationssymmetrisch. Die Außenelektrode 1, das Dielektrikum 2 und der Stab 3 sind konzentrisch zueinander ausgerichtet. Zwischen der Außenelektrode 1 und dem Dielektrikum 2 liegt ein Drahtgestrick 4, das den Zwischenraum ausfüllt. Entsprechend ist zwischen dem Dielektrikum 2 und dem Stab 3 ein Drahtgestrick 5 vorgesehen, das den dort befindlichen Zwischenraum ebenfalls ausfüllt. Die Außenelektrode 1 ist als Edelstahlrohr ausgebildet. Die bei der Ozonproduktion entstehende Abwärme wird durch Kühlwasser, welches an der Außenseite der Außenelektrode zwischen den Rohrböden entlang geführt wird, gekühlt. Das Dielektrikum 2 ist ein Glasrohr. Die Drahtgestricke 4 und 5 sind vorzugsweise als sogenannte Rundhohlschnur ebenfalls aus einem Drahtgestrick aus Edelstahl gefertigt. Der im Zentrum der Elektrodenanordnung angeordnete Stab 3 ist ein Isolator, beispielsweise aus Glas oder aus einem anderen sauerstoff- und ozonkompatiblen Material gefertigt. Der Stab 3 kann massiv ausgeführt sein. Im Betrieb wird die Elektrodenanordnung mit einem sauerstoffhaltigen Einsatzgas beaufschlagt, welches die Drahtgestricke 4 und 5 in Richtung der Pfeile 6 durchströmt. Schematisch ist eine elektrische Spannungsversorgung 7 angedeutet, die einerseits mit der Außenelektrode 1 und andererseits mit dem Gestrick 5 kontaktiert ist. Die von der Spannungsversorgung 7 zur Verfügung gestellte Betriebsspannung bewirkt in dem Raum zwischen den Elektroden 1, 5 und dem Dielektrikum 2 eine stille elektrische Entladung, die aus dem Sauerstoff, der in Richtung der Pfeile 6 durch die Gestricke 4 und 5 strömt, Ozon generiert.

Bei dem dargestellten Aufbau ist die innere Elektrode allein von dem Gestrick 5 gebildet, während der Stab 3 als Isolator eine stützende Funktion ausübt, die das gleichmäßige Ausfüllen des Innenraums des Dielektrikums 2 mit dem Drahtgestrick 5 gewährleistet. Durch diese Form der Elektrode kommt es zu einer Überlagerung von Volumen- und Oberflächenladung.

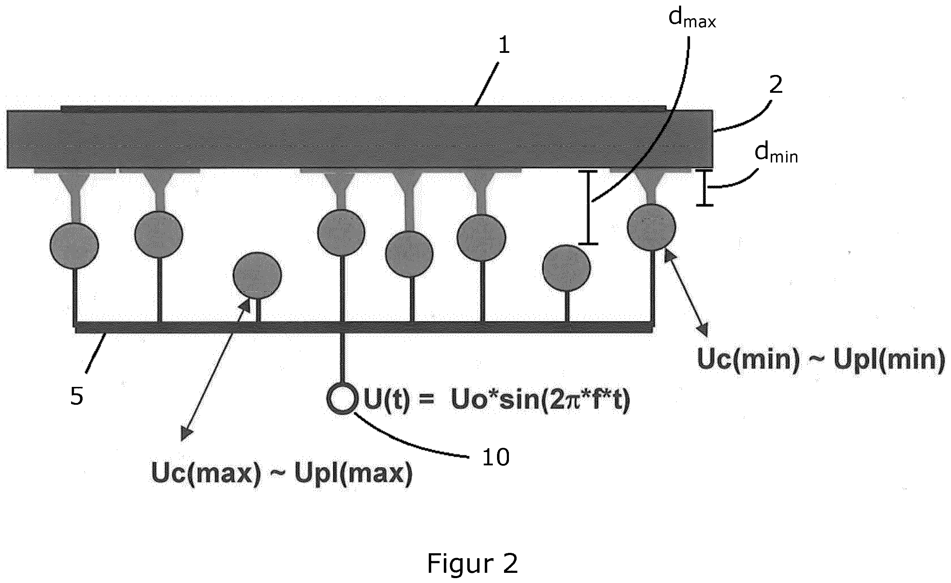

Im Gegensatz zu Ozongeneratoren, die eine definierte Spaltweite besitzen, ergibt sich durch die Profilierung der Hochspannungselektrode 5 eine Vielzahl von möglichen Spaltweiten und damit unterschiedlichen Schlagweiten d, die in der Figur 2 schematisch dargestellt sind. Die Spaltweite bzw. die Schlagweite d ist der Abstand zwischen einer Elektrode und dem Dielektrikum. Durch die unterschiedlichen Schlagweiten d im Bereich von $d_{min}$ bis $d_{max}$ ergeben sich auch unterschiedliche Zündspannungen $U_C$, die zwischen $U_C(d_{max})$ und $U_C(d_{min})$ liegen. Die Schlagweiten d liegen in der Größenordnung von $\mu$m-mm.

Die elektrische Spannungsversorgung 10 versorgt den Ozongenerator mit einer sinusförmigen Spannung, entsprechend $U(t) = U_0 *\sin(2\pi * f*t)$.

Mit steigender Spannungsamplitude $U_0$ werden zunächst die Entladungspunkte, die dichter am Dielektrikum 2 liegen, gezündet, während andere noch nicht gezündet haben.

Erfindungsgemäß wird die Spannungsamplitude $U_0$ in Abhängigkeit von der Teilchendichte $n_{gas}$ und der maximalen Größe des Entladungsspaltes $d_{max}$ gewählt.

Dabei ist die angelegte Spannungsamplitude $U_0$ so gering zu wählen, dass sie zwischen $U_C(d_{min})$ und $U_C(d_{max})$ einzuordnen ist, so dass nur ein bestimmter Anteil der Entladungspunkte zur Entladung zur Verfügung steht. Durch diese Auswahl an Entladungspunkten entsteht eine sogenannte effektive Spaltbreite, die die durchschnittliche Spaltbreite der gezündeten Entladungspunkte ist. Diese effektive Spaltbreite ist im Vergleich zu der Spaltbreite $d_{max}$ kleiner und somit für hohe Ozonkonzentrationen von Vorteil.

Um die gleiche elektrische Leistung in die Entladung wie im herkömmlichen Betrieb bei hohen Spannungsamplituden einbringen zu können, kann bei einem Betrieb des Ozongenerators die Frequenz f angepasst werden. Dadurch ist es möglich, mit dem erfindungsgemäßen Verfahren im Vergleich zum herkömmlichen Betrieb, bei der gleichen eingebrachten elektrischen Leistung, mehr Ozon pro eingesetzter Gasmenge zu erzeugen.

Vorzugsweise soll für die statistische Verteilung der Schlagdistanzen d $d * n_{gas} < 10^{22} \frac{1}{m^2}$ gelten. Diese Verteilung kann, zum Beispiel im Fall der Elektrodenanordnung der Figur 1, durch ein eng anliegendes Gestrick realisiert werden.

Die Hochspannungselektrode ist ein elektrisch leitendes Material, vorzugsweise Edelstahl mit profilierter Oberfläche. Die Hochspannungselektrode kann ein Drahtgeflecht oder ein Gestrick, ein Gewebe aber auch eine Drahtwicklung oder ein auf einer Oberfläche aufgebrachtes Granulat sein. Faserige Gebilde wie Fliese oder Filze sind ebenso geeignet wie Strukturen, die durch mechanische Bearbeitung oder durch Beschichtung, auf die Elektrode aufgebracht werden. Dabei ist die Profilierung stochastisch oder periodisch sowohl in Längs- als auch in Umfangsrichtung der Elektrode verteilt.

Es ist aber auch denkbar, anstelle der Elektrode das Dielektrikum zu profilieren, wodurch der gleiche Effekt erzielt werden kann.

Das erfindungsgemäße Verfahren ist nicht auf rohrförmige Elektrodenanordnung begrenzt. Es kann sowohl bei Röhren- als auch bei Plattenozonerzeugern verwendet werden. Dabei ist die Anwendung bei Einspalt- als auch Mehrspaltsystemen vorgesehen. Das elektrisch leitende Material der Elektrode kann mit oder ohne Trägermaterial in den Entladungsraum eingebracht werden.

Das erfindungsgemäße Verfahren zur Ozonerzeugung kann natürlich auch allgemein bei Plasmageneratoren Anwendung finden.

Die Schlagweiten des Ozongenerators lassen sich durch die erfindungsgemäße Ansteuerung des Ozongenerators mittels einer Variation der angelegten Spannung einstellen. Für die effiziente Ozonerzeugung von hohen Ozonkonzentrationen werden, wie bereits beschrieben, "narrow gap"-Systeme bevorzugt, wohingegen für niedrigere Ozonkonzentrationen größere Spaltweiten von Vorteil sind. Mit dem erfindungsgemäßen Verfahren können die Anforderungen an die Ozonproduktion allein durch die Variation der angelegten Spannung realisiert werden.

Durch das erfindungsgemäße Verfahren kann der Ozongenerator an die kundenspezifischen Anforderungen angepasst werden. Dies ist ökonomisch aufgrund immer weiter ansteigender Energiepreise als auch ökologisch vorteilhaft. Durch die Anpassung der Spaltweite können auch höhere Ozonkonzentrationen (>15 Gew.%) effizient generiert werden. Die Verwendung von hohen Ozonkonzentrationen zur Wasserbehandlung verbessert die Eintragseffizienz von Ozon in Wasser.

Durch die Verbesserung der Effizienz besonders bei hohen Ozonkonzentrationen können die Ozonerzeuger signifikant kleiner gebaut werden. Weiterer Vorteil des erfindungsgemäßen Verfahrens ist, dass die aufwendige Herstellung von planen bzw. zylindrischen glatten Elektrodenoberflächen entfällt.

Zudem ist eine Ozongenerierung bei höheren Kühlwassertemperaturen möglich, wodurch die Kosten für die Kühlung des Ozongenerators reduziert werden können. Die deutlich geringe Temperaturanfälligkeit der Elektrode erlaubt die Verwendung von größeren Temperaturdifferenzen zwischen Kühlwassereingang und Kühlwasserausgang, wodurch der Bedarf an Kühlwasser reduziert wird.

Durch das Betreiben des Ozongenerators bei niedrigen Spannungen kann der Trafo oder Umrichter kleiner gebaut werden. Zudem vermindert das Betreiben des Ozongenerators bei höheren Frequenzen die Lärmemission.

**Patentansprüche**

1. Verfahren zur Steuerung eines Ozongenerators mit einer Hochspannungselektrode (5) und wenigstens einer Gegenelektrode (1), wobei die Hochspannungselektrode (5) und die wenigstens eine Gegenelektrode (1) einen Zwischenraum begrenzen, in dem wenigstens ein Dielektrikum angeordnet ist und der von einem sauerstoffhaltigen Gas mit einer Teilchendichte $n_{gas}$ durchströmt wird, und wobei die Hochspannungselektrode (5) und die wenigstens eine Gegenelektrode (1) mit einem Anschluss für eine elektrische Spannungsversorgung (7) zur Erzeugung von stillen Entladungen in wenigstens einem Entladungsspalt versehen sind, und wobei Schlagweiten d der Entladung zwischen einer kleinsten Schlagweite $d_{min}$ und einer größten Schlagweite $d_{max}$ verteilt sind, **dadurch gekennzeichnet, dass** für eine zu erzeugende Ozonkonzentration > 12 Gew.-% Ozon die Spannungsamplitude $U_0$ einer Wechselspannung an der elektrischen Spannungsversorgung (7) so gewählt wird, dass $U_0 < 130*10^{-21}$ $V*m^2 * n_{gas} * d_{max} * (C_{DL}+C_g)/C_{DL}$ ist, mit der Teilchendichte $n_{gas}$, der größten Schlagweite $d_{max}$, der Kapazität des Dielektrikums $C_{DL}$ und der Kapazität des Entladungsspalts $C_g$.

2. Verfahren nach Anspruch 1, **dadurch gekennzeichnet, dass** $U_0 < 120*10^{-21}$ $V*m^2 * n_{gas} * d_{max} * (C_{DL}+C_g)/C_{DL}$ ist.

3. Verfahren nach Anspruch 1 oder 2, **dadurch gekennzeichnet, dass** $U_0 < 110*10^{-21}$ $V*m^2 * n_{gas} * d_{max} * (C_{DL}+C_g)/C_{DL}$ ist.

4. Verfahren nach einem der vorhergehenden Ansprüche, **dadurch gekennzeichnet, dass** $U_0 < 100*10^{-21}$ $V*m^2 * n_{gas} * d_{max} * (C_{DL}+C_g)/C_{DL}$ ist.

5. Verfahren nach einem der vorhergehenden Ansprüche, **dadurch gekennzeichnet, dass** für eine zu erzeugende Ozonkonzentration > 18 Gew.-% Ozon die Spannungsamplitude $U_0$ so gewählt wird, dass $U_0 < 100*10^{-21}$ $V*m^2 * n_{gas} * d_{max} * (C_{DL}+C_g)/C_{DL}$ ist.

6. Verfahren nach einem der vorhergehenden Ansprüche, **dadurch gekennzeichnet, dass** $U_0 < 90*10^{-21}$ $V*m^2 * n_{gas} * d_{max} * (C_{DL}+C_g)/C_{DL}$ ist.

7. Verfahren nach einem der vorhergehenden Ansprüche, **dadurch gekennzeichnet, dass** als Hochspannungselektrode (5) eine profilierte Elektrode verwendet wird.

8. Verfahren nach einem der vorhergehenden Ansprüche, **dadurch gekennzeichnet, dass** die Verteilung der Schlagweiten von $d_{min}$ bis $d_{max}$ durch ein Flächengebilde (5) aus Draht gebildet ist.

9. Verfahren nach einem der vorhergehenden Ansprüche, **dadurch gekennzeichnet, dass** die Schlagweiten $d_{min}$ bis $d_{max}$ kontinuierlich und stochastisch oder periodisch verteilt sind.

10. Verfahren nach einem der vorhergehenden Ansprüche, **dadurch gekennzeichnet, dass** der Ozongenerator eine einzige Gegenelektrode (1) aufweist und das Dielektrikum in Anlage an die Gegenelektrode (1) angeordnet ist.

11. Verfahren nach einem der vorhergehenden Ansprüche, **dadurch gekennzeichnet, dass** die wenigstens eine Gegenelektrode (1) und die Hochspannungselektrode (5) rohrförmig und konzentrisch zueinander ausgerichtet sind, und dass das Flächengebilde eine runde Hohlschnur ist.

12. Verfahren nach einem der vorhergehenden Ansprüche 1 bis 10, **dadurch gekennzeichnet, dass** die Hochspannungselektrode (1) und die wenigstens eine Gegenelektrode (5) Platten sind und einen Plattenozonerzeuger bilden.

## Claims

1. Method for controlling an ozone generator with a high-voltage electrode (5) and at least one counter electrode (1), wherein the high-voltage electrode (5) and the at least one counter electrode (1) bound a space, in which at least one dielectric is arranged and which is perfused by an oxygen-containing gas with a particle density $n_{gas}$, and wherein the high-voltage electrode (5) and the at least one counter electrode (1) are provided with a connection for an electrical power supply (7) for generating silent discharges in at least one discharge gap, and whereby discharge distances d of the discharge are distributed between a minimum discharge distance $d_{min}$ and a maximum discharge distance $d_{max}$, **characterised in that** for an ozone concentration to be generated > 12 wt% ozone, the voltage amplitude $U_0$ of an AC voltage to the electrical power supply (7) is selected so that $U_0 < 130 * 10^{-21} V * m^2 * n_{gas} * d_{max} * (C_{DL}+C_G)/C_{DL}$, with the particle density $n_{gas}$, the maximum distance $d_{max}$, the capacity of the dielectric $C_{DL}$ and the capacity of the discharge gap $C_g$.

2. Method according to Claim 1, **characterised in that** $U_0 < 120 * 10^{-21} V * m^2 * n_{gas} * d_{max} * (C_{DL}+C_g)/C_{DL}$.

3. Method according to Claim 1 or 2, **characterised in that** $U_0 < 110 * 10^{-21} V * m^2 * n_{gas} * d_{max} * (C_{DL}+C_g)/C_{DL}$.

4. Method according to any one of the preceding claims, **characterised in that** $U_0 < 100 * 10^{-21} V * m^2 * n_{gas} * d_{max} * (C_{DL}+C_G)/C_{DL}$.

5. Method according to any one of the preceding claims, **characterised in that** for an ozone concentration > 18 wt% ozone to be generated, the voltage amplitude $U_0$ is chosen so that $U_0 < 100 * 10^{-21} V * m^2 * n_{gas} * d_{max} * (C_{DL}+C_g)/C_{DL}$.

**6.** Method according to any one of the preceding claims, **characterised in that** $U_0 < 90 * 10^{-21}$ V $* m^2 * n_{gas} * d_{max} * (C_{DL}+C_g)/C_{DL}$.

**7.** Method according to any one of the preceding claims, **characterised in that** a profiled electrode is used as the high-voltage electrode (5).

**8.** Method according to any one of the preceding claims, **characterised in that** the distribution of the discharge distances from $d_{min}$ to $d_{max}$ is formed by a fabric (5) made of wire.

**9.** Method according to any one of the preceding claims, **characterised in that** the discharge distances $d_{min}$ to $d_{max}$ are distributed continuously and stochastically or periodically.

**10.** Method according to any one of the preceding claims, **characterised in that** the ozone generator has a single counter electrode (1) and the dielectric is arranged in contact with the counter electrode (1).

**11.** Method according to any one of the preceding claims, **characterised in that** the at least one counter electrode (1) and the high-voltage electrode (5) are tubular and concentrically aligned with each other, and that the surface structure is a round hollow cord.

**12.** Method according to any one of the preceding Claims 1 to 10, **characterised in that** the high-voltage electrode (1) and the at least one counter electrode (5) are plates and form a plate-type ozone generator.

## Revendications

**1.** Procédé de commande d'un générateur d'ozone comprenant une électrode à haute tension (5) et au moins une contre-électrode (1), l'électrode à haute tension (5) et l'au moins une contre-électrode (1) délimitant un espace intermédiaire dans lequel est disposé au moins un diélectrique et qui est traversé par un courant de gaz contenant de l'oxygène ayant une densité de particules $n_{gas}$, et l'électrode à haute tension (5) et l'au moins une contre-électrode (1) étant pourvue d'une borne pour une alimentation électrique (7) destinée à générer des décharges silencieuses dans au moins un entrefer de décharge, et les distances de décharge d de la décharge étant distribuées entre une distance de décharge la plus petite $d_{min}$ et une distance de décharge la plus grande $d_{max}$, **caractérisé en ce que** pour une concentration d'ozone générée > 12 % massiques d'ozone, l'amplitude de tension $U_0$ d'une tension alternative au niveau de l'alimentation électrique (7) est choisie de

telle sorte que $U_0 < 130*10^{-21}$ V*m² *$n_{gas}$*$d_{max}$* $(C_{DL}+C_g)/C_{DL}$, avec la densité de particules $n_{gas}$, la distance de décharge la plus grande $d_{max}$, la capacité du diélectrique $C_{DL}$ et la capacité de l'entrefer de décharge $C_g$.

**2.** Procédé selon la revendication 1, **caractérisé en ce que** $U_0 < 120*10^{-21}$ V*m² *$n_{gas}$*$d_{max}$* $(C_{DL}+C_g)/C_{DL}$.

**3.** Procédé selon la revendication 1 ou 2, **caractérisé en ce que** $U_0 < 110*10^{-21}$ V*m² *$n_{gas}$*$d_{max}$* $(C_{DL}+C_g)/C_{DL}$.

**4.** Procédé selon l'une des revendications précédentes, **caractérisé en ce que** $U_0 < 100*10^{-21}$ V*m² *$n_{gas}$*$d_{max}$* $(C_{DL}+C_g)/C_{DL}$.

**5.** Procédé selon l'une des revendications précédentes, **caractérisé en ce que** pour une concentration d'ozone générée > 18 % massiques d'ozone, l'amplitude de tension $U_0$ est choisie de telle sorte que $U_0 < 100*10^{-21}$ V*m² *$n_{gas}$*$d_{max}$* $(C_{DL}+C_g)/C_{DL}$.

**6.** Procédé selon l'une des revendications précédentes, **caractérisé en ce que** $U_0 < 90*10^{-21}$ V*m² *$n_{gas}$*$d_{max}$* $(C_{DL}+C_g)/C_{DL}$.

**7.** Procédé selon l'une des revendications précédentes, **caractérisé en ce que** l'électrode à haute tension (5) utilisée est une électrode profilée.

**8.** Procédé selon l'une des revendications précédentes, **caractérisé en ce que** la distribution des distances de décharge de $d_{min}$ à $d_{max}$ est formée par une structure plane (5) en fil métallique.

**9.** Procédé selon l'une des revendications précédentes, **caractérisé en ce que** la distribution des distances de décharge de $d_{min}$ à $d_{max}$ est continue et stochastique ou périodique.

**10.** Procédé selon l'une des revendications précédentes, **caractérisé en ce que** le générateur d'ozone possède une contre-électrode (1) unique et le diélectrique est disposé en appui contre la contre-électrode (1).

**11.** Procédé selon l'une des revendications précédentes, **caractérisé en ce que** l'au moins une contre-électrode (1) et l'électrode à haute tension (5) sont tubulaires et orientées de manière concentrique l'une par rapport à l'autre, et **en ce que** la structure plane est un cordon creux rond.

**12.** Procédé selon l'une des revendications précédentes 1 à 10, **caractérisé en ce que** l'électrode à haute tension (5) et l'au moins une contre-électrode (1) sont des plaques et forment un générateur d'ozone

à plaques.

Stand der Technik

Figur 1

$d_{max}$

1

2

$d_{min}$

$Uc(min) \sim Upl(min)$

$U(t) = Uo*sin(2\pi*f*t)$

5

$Uc(max) \sim Upl(max)$

10

Figur 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2007014473 A1
- DE 102011008947 A1